# EUROPÄISCHE PATENTANMELDUNG

(11) **EP 1 079 138 A1**
(43) Veröffentlichungstag der Anmeldung: **28.02.2001**
(21) Anmeldenummer: 00115696.7
(22) Anmeldetag: 21.07.2000
(51) Int. Cl.: F16F 9/05, B60G 17/052

(54) **System mit regelbarer Luftfeder und regelbarem Stossdämpfer und zugehöriges Steuerverfahren**

(30) Priorität: 25.08.1999 DE 19940198
(71) Anmelder: Continental Aktiengesellschaft, 30165 Hannover (DE)
(72) Erfinder: Krauss, Hans Peter, 30453 Hannover (DE)

(57) **Zusammenfassung**

Die Erfindung betrifft ein System, enthaltend eine Luftfeder 2, die ein Luftvolumen 16 umschließt und einen dazu parallel geschalteten regelbaren Stoßdämpfer 4. Darüber hinaus enthält das System ein Zusatzvolumen 22, mit dem das Luftvolumen 16 der Luftfeder 2 über eine regelbare Drossel 20 verbunden ist. Über eine Regelung der Drossel 20 und des regelbaren Stoßdämpfers 4 können unabhängig voneinander die Federsteifigkeit und die Gesamtdämpfung des Systems vorgegeben werden.

## Beschreibung

Die Erfindung betrifft ein System, insbesondere für Kraftfahrzeuge, enthaltend eine Luftfeder, die ein Luftvolumen umschließt, und einen dazu parallel geschalteten regelbaren Stoßdämpfer. Die Erfindung betrifft ferner ein Verfahren zur Regelung eines solchen Systems.

Aus der DE 43 34 007 A1 ist eine Stoßdämpferfedereinheit bekannt, in der eine Luftfeder parallel zu einem regelbaren pneumatischen Stoßdämpfer geschaltet ist. Die Luftfeder ist oberhalb des pneumatischen Stoßdämpfers angeordnet und bei einem Einfedern der Luftfeder wird in einer Kammer des pneumatischen Stoßdämpfers ein Kolben nach unten bewegt bzw. umgekehrt. Die Stirnfläche des Kolbens enthält regelbare Drosselöffnungen, so daß bei einer Auf- bzw. Abbewegung des Kolbens Luft von einer erstenTeilkammer in eine zweite Teilkammer des pneumatischen Dämpfers strömen kann. Eine Dämpfung der Stoßdämpferfedereinheit kommt hierbei durch die Strömungsverluste der überströmenden Luft in den Drosselöffnungen zustande.

Mit der aus der DE 43 34 007 A1 bekannten Stoßdämpferfedereinheit kann eine große Dämpferarbeit verrichtet und ein System somit ausreichend stark bedämpft werden, da bei einer Bewegung des Kolbens ein ausreichend großer Luftstrom über die Drosselöffnungen von einer Teilkammer in die andere Teilkammer überführt wird. Die Stoßdämpferfedereinheit weist jedoch den Nachteil auf, daß durch die Einstellung der Drossel in der Stirnfläche des Kolbens nicht nur die Dämpfung, sondern auch die Federsteifigkeit beeinflußt wird. Infolgedessen kann nur eine der beiden Größen unabhängig voneinander vorgegeben werden, die andere ergibt sich dann zwangsläufig.

Dies führt dazu, daß zwar die Federsteifigkeit der Stoßdämpferfedereinheit in einem großen Bereich verstellt werden kann, dann jedoch die sich ergebende Dämpfung nicht bei jeder Drosseleinstellung dem Bedarf des Fahrzeuges entspricht.

Die geringste, einstellbare Federsteifigkeit ergibt sich bei ganz geöffneter Drossel, wobei die Dämpfung gleich Null ist.

Die größte einstellbare Federsteifigkeit ergibt sich bei ganz geschlossener Drossel, bei der keine Luft mehr überströmt und Dämpfung auch gleich Null ist.

Beide Zustände genügen nicht den Anforderungen im Fahrzeug. Ein Zustand, der den Anforderungen genügt, hat eine Drosseleinstellung, die dazwischen liegt und nur in einem schmalen Bereich verstellbar ist.

Zusammenfassend ist festzustellen, daß bei der aus der DE 43 34 007 A1 bekannten Stoßdämpferfedereinheit die Größe der Dämpfung nicht immer in geeigneter Weise an die Federsteifigkeit der gesamten Stoßdämpferfedereinheit angepaßt werden kann.

Der Erfindung liegt die Aufgabe zugrunde, ein System, bestehend aus einer Luftfeder und einem dazu parallel geschalteten regelbaren Stoßdämpfer zu schaffen, bei dem die Dämpfung an die Federsteifigkeit anpassbar ist. Der Erfindung liegt ebenfalls die Aufgabe zugrunde, ein Verfahren zur Regelung eines derartigen Systems zu schaffen.

Gemäß den kennzeichnenden Merkmalen des Anspruchs 1 wird die Aufgabe dadurch gelöst, daß das System zusätzlich zu der Luftfeder und dem Stoßdämpfer ein Zusatzvolumen enthält, mit dem das Luftvolumen der Luftfeder über eine regelbare Drossel in Verbindung steht.

Gemäß dem nebengeordneten Anspruch 6 wird ein System gemäß Anspruch 1 in folgenden Verfahrensschritten geregelt:
- Es wird eine Gesamtdämpfung des Systems und eine Federsteifigkeit der Luftfeder vorgegeben
- der Drosselwiderstand der Drossel, über die das Luftvolumen der Luftfeder mit dem Zusatzvolumen verbunden ist, wird so eingestellt, daß die Luftfeder die vorgegebene Federsteifigkeit aufweist
- frequenzabhängig wird die Größe der Dämpfung bestimmt, die an der Drossel, über die das Luftvolumen der Luftfeder mit dem Zusatzvolumen verbunden ist, entsteht
- der regelbare Dämpfer wird so eingestellt, daß die Summe der in dem Stoßdämpfer entstehenden Dämpfung und der zwischen dem Luftvolumen der Luftfeder und dem Zusatzvolumen entstehenden Dämpfung weitestgehend der Gesamtdämpfung entspricht.

Bevorzugt wird die Gesamtdämpfung so vorgegeben, daß der Achsaufbau und Achsbauteile im gesamten Frequenzbereich ausreichend bedämpft werden, wobei der Frequenzbereich zumindest die Eigenfrequenzen sämtlicher schwingungsfähiger Bauteile des Systems, das bedämpft werden soll, umfaßt (d. h. insbesondere die Eigenfrequenzen des Aufbaus und der Achsbauteile).

Die mit der Erfindung erzielten Vorteile sind insbesondere darin zu sehen, daß die Gesamtdämpfung und die Federsteifigkeit des Systems unabhängig voneinander vorgegeben werden können. Ein weiterer Vorteil der Erfindung ist darin zu sehen, daß die Eigenfrequenzen des Systems über die Einstellung der Größe der Federsteifigkeit und über die davon unabhängige Einstellung der Dämpfung stufenlos vorgegeben werden können. Ein weiterer Vorteil der Erfindung ist schließlich darin zu sehen, daß die mit dem Zusatzvolumen verbundene Luftfeder zu der Gesamtdämpfung des Systems beiträgt und somit der Stoßdämpfer bei einer vorgegebenen Gesamtdämpfung nur eine geringere Dämpfung zu leisten braucht. Dieser kann somit kleiner dimensioniert werden und es fällt weniger Wärme in dem Stoßdämpfer an.

Gemäß einer Weiterbildung der Erfindung ist das Zusatzvolumen unveränderlich ausgebildet. Der Vorteil dieser Weiterbildung ist darin zu sehen, daß ein unveränderliches Zusatzvolumen besonders einfach auszubilden ist.

Gemäß einem ersten Ausführungsbeispiel der Erfindung ist die Luftfeder und der Stoßdämpfer jeweils alleinstehend angeordnet. Gemäß einem zweiten Ausführungsbeispiel sind die Luftfeder und der Stoßdämpfer in einer Stoßdämpferfedereinheit angeordnet. Dies hat den Vorteil, daß das System, bestehend aus der Luftfeder und dem Stoßdämpfer, nur wenig Bauraum beansprucht. Vorzugsweise ist bei diesem Ausführungsbeispiel die Luftfeder oberhalb des Stoßdämpfers angeordnet.

Gemäß einer Weiterbildung der Erfindung ist das Luftvolumen der Luftfeder über eine Leitung mit dem Zusatzvolumen verbunden. Gemäß einer alternativen Weiterbildung der Erfindung ist das Luftvolumen der Luftfeder direkt mit dem Zusatzvolumen verbunden. In diesem Fall wird das Luftvolumen der Luftfeder und das Zusatzvolumen von einer gemeinsamen Trennwand begrenzt, in der die regelbare Drossel angeordnet ist. Der Vorteil dieser Weiterbildung ist darin zu sehen, daß die Luftfeder und das mit ihr in Verbindung stehende Zusatzvolumen nur wenig Bauraum benötigen.

Ein Ausführungsbeispiel und weitere Vorteile der Erfindung werden im Zusammenhang mit den nachstehenden Figuren erläutert, darin zeigt:
- Figur 1: ein Kraftfahrzeug mit einem System, bestehend aus einer Luftfeder und einem Stoßdämpfer,
- Figur 2: ein System, bestehend aus einer Luftfeder und einem Stoßdämpfer.

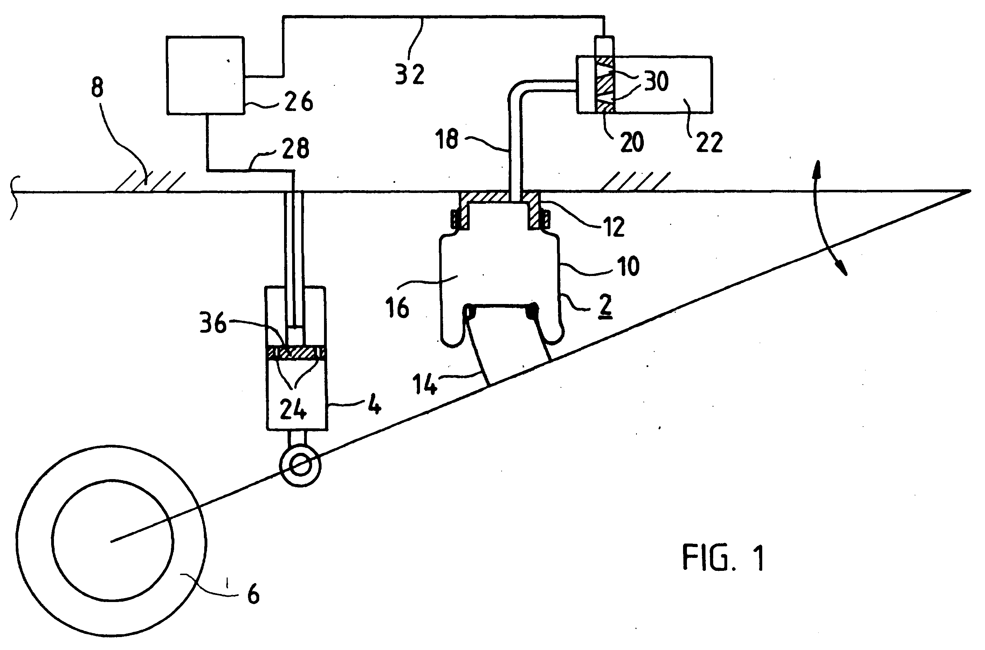

Figur 1 zeigt in stark schematisierter Darstellung ein Kraftfahrzeug mit einem System, das eine Luftfeder 2 und einen regelbaren Stoßdämpfer 4 enthält, wobei nur die für die nachfolgenden Erläuterungen notwendigen Bestandteile gezeigt sind. In dem gezeigten Ausführungsbeispiel ist der Stoßdämpfer 4 beispielhaft als pneumatischer Stoßdämpfer dargestellt, selbstverständlich kann das System jedoch auch andere Stoßdämpfer bekannter Bauarten enthalten. Mit Hilfe der Luftfeder 2 und des Stoßdämpfers 4 ist ein Kraftfahrzeugrad 6 gegenüber einem Fahrzeugaufbau 8 des Kraftfahrzeuges federnd gelagert. Die Luftfeder 2 ist zu dem regelbaren Stoßdämpfer 4 parallel geschaltet, d.h. bei einer Einfederbewegung des Kraftfahrzeugrades 6 werden die Luftfeder 2 und der Stoßdämpfer 4 zwangsweise immer gleichzeitig verkürzt, wohingegen bei einer Ausfederbewegung des Kraftfahrzeugrades 6 die Luftfeder 2 und der Stoßdämpfer 4 zwangsweise immer gleichzeitig verlängert werden. Der regelbare Stoßdämpfer 4 weist in einem Verdrängerkolben 36 regelbare Drosselöffnungen 24 auf, durch die bei einer Verlängerung oder Verkürzung des Stoßdämpfers 4 ein Dämpfungsmedium von einer Teilkammer in eine andere Teilkammer des Stoßdämpfers 4 strömt. Der Stoßdämpfer 4 kann beispielsweise als hydraulischer oder pneumatischer Stoßdämpfer aufgebaut sein. Derartige Stoßdämpfer sind an sich bekannt, so daß sie hier nicht näher erläutert werden sollen. Zusätzlich zu der Luftfeder 2 und dem Stoßdämpfer 4 weist das System ein Zusatzvolumen 22 auf, das außerhalb des Luftvolumens 16 der Luftfeder 2 und des Stoßdämpfers 4 angeordnet ist. Die Größe des Zusatzvolumens 22 ist unabhängig von der dem momentanen Einfederungszustand der Luftfeder und von der momentanen Stellung des regelbaren Stoßdämpfers 4, d. h. von der momentanen Stellung des Verdrängerkolbens 36.

Die Luftfeder 2 enthält einen Rollbalg 10, der in an sich bekannter Art und Weise zwischen einem Anschlußteil 12 und einem Abrollkolben 14 angeordnet ist und ein Luftvolumen 16 umschließt. Das Luftvolumen 16 steht über eine Leitung 18, die durch das Anschlußteil 12 geführt ist, über eine Drossel 20 mit dem Zusatzvolumen 22 in Verbindung, die unabhängig von dem Drosselöffnungen 24 im Verdrängerkolben 36 regelbar ist. Das Zusatzvolumen 22 ist ferner vorzugsweise starr ausgebildet, d.h. in seiner Größe unveränderlich. Alternativ ist es möglich, das Zusatzvolumen 22 in seiner Größe veränderlich auszubilden. Dies kann beispielsweise dadurch erfolgen, daß das Zusatzvolumen 22 durch eine Trennwand in zwei Kammern unterteilt wird, in der sich regelbare Drosseln, die insbesondere vollkommen geschlossen und geöffnet werden können, befinden. Die regelbare Drossel 20 kann beispielsweise so aufgebaut sein, wie es aus der DE 43 34 007 A1 bekannt ist. Andere dem Fachmann geläufige Aufbauten einer regelbaren Drossel sind denkbar.

Die Drosseleinstellung sämtlicher Drosseln des Systems ist von der Regeleinheit 26 unabhängig voneinander regelbar. Die Drosseleinstellung (d. h. im Ausführungsbeispiel die Größe der Drosselöffnungen 24) und damit die Größe der Dämpfung des Stoßdämpfers 4 ist von der Regeleinheit 26 über eine Leitung 28 regelbar. Die Drosseleinstellung (d. h. die Größe der Drosselöffnungen 30) in der Drossel 20 (d.h. der Drosselwiderstand der Drossel 20), über die das Luftvolumen 16 der Luftfeder 2 mit dem Zusatzvolumen 22 verbunden ist, ist ebenfalls über eine Leitung 32 von der Regeleinheit 26 regelbar. Durch die Drosseleinstellung der Drossel 20 kann die Federsteifigkeit der Luftfeder 10 stufenlos eingestellt werden. Bei vollständig geschlossenen Drosselöffnungen 30 weist die Luftfeder 10 die größte Federsteifigkeit und bei vollständig geöffneten Drosselöffnungen 30 weist die Luftfeder 10 die kleinste Federsteifigkeit auf. Abhängig von der eingestellten Größe der Drosselöffnungen 30 kann die Luftfeder 10 alle dazwischenliegenden Federsteifigkeiten aufweisen.

Die Regelung der Drosselöffnungen 24 des Stoßdämpfers und der Drosselöffnungen 30 in der Drossel 20 zwischen der Luftfeder 2 und dem Zusatzvolumen 22 erfolgt durch die Regeleinheit 26 im einzelnen wie folgt: In der Regeleinheit 26 wird in Abhängigkeit von der Fahrsituation des Kraftfahrzeuges die gewünschte Federsteifigkeit des Federbeines vorgegeben und über die Leitung 32 mit der Drossel 20 des Zusatzvolumens 22 eingestellt.

Dann wird in der Regeleinheit 26 die gewünschte Gesamtdämpfung des Systems, bestehend aus Luftfeder 2 mit Zusatzvolumen 22 und Stoßdämpfer 4, vorgegeben. Diese Dämpfung wird zum Teil von der Luftfeder 2 mit Zusatzvolumen 22 aufgebracht und wird in der Regeleinheit 26 wie folgt bestimmt: Zunächst bestimmt die Regeleinheit (z. B. anhand der Meßsignale von Beschleunigungssensoren) in an sich bekannter Art und Weise, mit welcher Frequenz der Teil des Kraftfahrzeuges, dem die Luftfeder 2 mit dem Zusatzvolumen 22 zugeordnet ist, momentan hauptsächlich schwingt. Danach wird in der Regeleinheit 26 die Größe der Dämpfung bestimmt, die sich zwischen der Luftfeder 2 und dem Zusatzvolumen 22 bei der zuvor eingestellten Drosseleinstellung der Drossel 20 und bei der momentanen Frequenz ergibt. Dies kann beispielsweise mittels einer Kennlinie erfolgen, in der die Größe der Dämpfung über der Frequenz aufgetragen ist.

Die noch erforderliche Restdämpfung, welche im Stoßdämpfer 4 aufgebracht wird, wird von der Regeleinheit 26 ermittelt, die Drossel 24 des Stoßdämpfers 4 dann über die Leitung 28 entsprechend eingestellt, daß die Summe der Dämpfung von der Luftfeder 2 mit Zusatzvolumen 22 und der Restdämpfung der Gesamtdämpfung und den Anförderungen des Fahrzeuges entspricht.

Zur Regelung werden bekannte Regelalgorithmen für Dämpferregelungen, mit denen die Drossel eines verstellbaren Dämpfers geregelt wird (die z.B. nach dem Skyhook-Prinzip arbeiten) derart erweitert, daß zusätzlich die Ansteuerung der verstellbaren Drossel 20 des Zusatzvolumens 22 in die Regelalgorithmen einbezogen ist. Hierbei werden die Drosseln 20 und 24 entsprechend den Anforderungen des Fahrzeuges im momentanen Fahrzustand eingestellt. Man hat dann eine kombinierte Luftfeder-/Dämpferregelung.

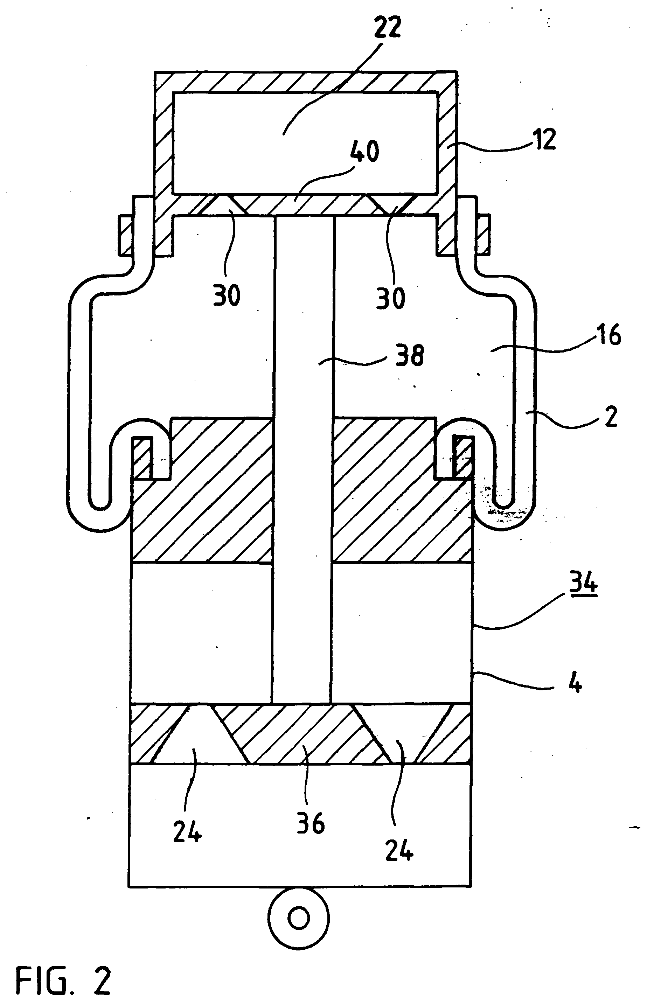

Figur 2 zeigt ein System, in dem die Luftfeder 2 und der Stoßdämpfer 4 in einer Stoßdämpferfedereinheit 34 angeordnet ist. Hierbei ist die Luftfeder 2 vorzugsweise oberhalb des Stoßdämpfers 4 angeordnet und der Verdrängerkolben 36 des Stoßdämpfers 4 ist über eine Kolbenstange 38 mit dem oberen Anschlußteil 12 der Luftfeder verbunden. Bei einer Einfederung der Luftfeder 2 wird dementsprechend auch der Verdrängerkolben 36 nach unten bewegt und bei einer Ausfederung der Luftfeder 2 wird er dementsprechend nach oben bewegt, so daß die Luftfeder 2 zu dem Stoßdämpfer 4 parallel geschaltet ist. Bei dem in der Figur 2 gezeigten Ausführungsbeispiel ist das Zusatzvolumen 22 im oberen Anschlußteil 12 angeordnet und unveränderlich ausgebildet. Zwischen dem Luftvolumen 16 der Luftfeder 2 und dem Zusatzvolumen 22 befindet sich eine Trennwand 40, die Teil des oberen Anschlußteils 12 ist und in der sich die regelbaren Drosselöffnungen 30 befinden.

Sowohl die Größe der Drosselöffnungen 30 als auch die Größe der Drosselöffnungen 24 ist durch die Regeleinheit 26 (siehe Figur 1) regelbar. Dies geschieht gemäß dem im Zusammenhang mit Figur 1 erläuterten Verfahren.

### Bezugszeichenlisten

- 2: Luftfeder
- 4: Stoßdämpfer
- 6: Kraftfahrzeugrad
- 8: Fahrzeugaufbau
- 10: Rollbalg
- 12: Anschlußteil
- 14: Abrollkolben
- 16: Luftvolumen
- 18: Leitung
- 20: regelbare Drossel
- 22: Zusatzvolumen
- 24: Drosselöffnungen des Stoßdämpfers
- 26: Regeleinheit
- 28: Leitung
- 30: Drosselöffnungen
- 32: Leitung
- 34: Stoßdämpferfedereinheit
- 36: Verdrängerkolben
- 38: Kolbenstange
- 40: Trennwand

## Patentansprüche

1. System, insbesondere für Kraftfahrzeuge, enthaltend eine Luftfeder (2), die ein Luftvolumen (16) umschließt, und einen dazu parallel geschalteten regelbaren Stoßdämpfer (4),
**dadurch gekennzeichnet,** daß
das System zusätzlich zu der Luftfeder (2) und dem Stoßdämpfer (4) ein Zusatzvolumen (22) enthält, mit dem das Luftvolumen (16) der Luftfeder (2) über eine regelbare Drossel (20) in Verbindung steht.

2. System nach Anspruch 1, dadurch gekennzeichnet, daß das separate Zusatzvolumen (22) unveränderlich ausgebildet ist.

3. System nach einem der Ansprüche 1 bis 2, dadurch gekennzeichnet, daß die Luftfeder (2) und der Stoßdämpfer (4) jeweils alleinstehend angeordnet ist.

4. System nach einem der Ansprüche 1 bis 2, dadurch gekennzeichnet, daß die Luftfeder (2) und der Stoßdämpfer (4) in einer Stoßdämpferfedereinheit (34) angeordnet sind.

5. System nach einem der Ansprüche 1 bis 4, dadurch gekennzeichnet, daß das Luftvolumen (16) der Luftfeder (2) über eine Leitung (18) mit dem Zusatzvolumen (22) verbunden ist.

6. System nach einem der Ansprüche 1 bis 4, dadurch gekennzeichnet, daß das Luftvolumen (16) der Luftfeder (2) direkt mit dem Zusatzvolumen (22) verbunden ist.

7. Verfahren zur Regelung eines Systems, insbesondere für Kraftfahrzeuge, enthaltend eine Luftfeder (2), die ein Luftvolumen (16) umschließt, und einen dazu parallel geschalteten regelbaren Stoßdämpfer (4), und ein Zusatzvolumen (22), mit dem das Luftvolumen (16) der Luftfeder (2) über eine regelbare Drossel (20) in Verbindung steht, in folgenden Verfahrensschritten:
- es wird eine Gesamtdämpfung des Systems und eine Federsteifigkeit der Luftfeder (2) vorgegeben
- der Drosselwiderstand der Drossel (20), über die das Luftvolumen (16) der Luftfeder (2) mit dem Zusatzvolumen (22) verbunden ist, wird so eingestellt, daß die Luftfeder (2) die vorgegebene Federsteifigkeit aufweist
- frequenzabhängig wird die Größe der Dämpfung bestimmt, die an der Drossel (20), über die das Luftvolumen (16) der Luftfeder (2) mit dem Zusatzvolumen (22) verbunden ist, entsteht
- der regelbare Stoßdämpfer wird so eingestellt, daß die Summe der in dem Stoßdämpfer (4) entstehenden Dämpfung und der zwischen dem Luftvolumen (16) der Luftfeder (2) und dem Zusatzvolumen (22) entstehenden Dämpfung weitestgehend der Gesamtdämpfung entspricht.
